# DEMANDE DE BREVET EUROPEEN

(11) **EP 4 340 546 A1**
(43) Date de publication de la demande: **20.03.2024**
(21) Numéro de dépôt: 23198198.6
(22) Date de dépôt: 19.09.2023
(51) Int. Cl.: H05B 47/21, G06V 20/59, H05B 47/17, G06T 7/00, H05B 45/50, H05B 45/58

(54) **PROCÉDÉ DE DÉTECTION D'UN DYSFONCTIONNEMENT D'UN LUMINAIRE, DISPOSITIF DE DÉTECTION ÉLECTRONIQUE ET PRODUIT PROGRAMME D'ORDINATEUR ASSOCIÉS**

(30) Priorité: 19.09.2022 FR 2209425
(71) Demandeur: ALSTOM Holdings, 93400 Saint-Ouen-sur-Seine (FR)
(72) Inventeur: CAMP, Stéphane, 92000 Nanterre (FR)
(74) Mandataire: Lavoix

(57) **Abrégé**

La présente invention a pour objet un procédé 100 ; 200 de détection d'un dysfonctionnement d'un luminaire 20 à l'intérieur d'un véhicule, notamment ferroviaire. Le procédé 100 ; 200 est mis en oeuvre par un dispositif électronique de détection 30.

Le procédé comprend une étape d'acquisition 120 ; 220 d'une image d'un compartiment 15 à l'intérieur du véhicule, le compartiment 15 comprenant au moins un luminaire 20. Le procédé comprend en outre une étape de détection 130 ; 230 d'au moins un luminaire 20 dysfonctionnel par traitement de l'image acquise.

## Description

La présente invention concerne un procédé de détection d'un dysfonctionnement d'un luminaire à l'intérieur d'un véhicule.

L'invention concerne le domaine de la maintenance des luminaires au sein d'un véhicule, tel qu'un véhicule de transport en commun, en particulier un train, un bus ou un tramway.

Dans le domaine des transports en commun, il est connu que des luminaires à l'intérieur d'un véhicule puissent être défectueux. Dans ce cas, l'expérience utilisateur des usagers est altérée puisque la luminosité dans le véhicule n'est plus assurée. En outre, si un trop grand nombre de luminaires sont dysfonctionnels, des images de caméras de surveillance à l'intérieur du véhicule peuvent être difficiles à exploiter.

Il est donc recommandé de vérifier régulièrement l'état des différents luminaires du véhicule.

Une telle vérification est cependant longue et fastidieuse puisqu'elle requiert le contrôle de chaque luminaire du véhicule par un opérateur.

Il existe donc un besoin de simplifier la détection d'un dysfonctionnement d'un luminaire à l'intérieur d'un véhicule.

À cet effet, l'invention a pour objet un procédé de détection d'un dysfonctionnement d'un luminaire à l'intérieur d'un véhicule, notamment ferroviaire, le procédé étant mis en oeuvre par un dispositif électronique de détection et comprenant les étapes suivantes :
- acquisition d'une image d'un compartiment à l'intérieur du véhicule, le compartiment comprenant au moins un luminaire, et
- détection d'au moins un luminaire dysfonctionnel par traitement de l'image acquise.

Selon des modes de réalisation particuliers, le procédé de détection comprend une ou plusieurs des caractéristiques suivantes, prise(s) isolément ou suivant toutes les combinaisons techniquement possibles :
- l'image acquise est issue d'une caméra de surveillance embarquée dans le véhicule,
- le procédé comprend en outre une étape d'initialisation comportant la réception d'au moins une première image de référence représentant le compartiment dans lequel chaque luminaire est fonctionnel et allumé,
   - l'étape d'initialisation comprend en outre l'obtention de la position de chaque luminaire dans l'au moins une première image de référence et d'une couleur de chaque luminaire dans l'au moins une première image de référence, dite couleur de référence,
   - lors de l'étape de détection, le traitement de l'image acquise comprend les sous-étapes suivantes :
      - analyse de l'image acquise à partir de la position de chaque luminaire dans l'au moins une première image de référence pour obtenir la couleur de chaque luminaire dans l'image acquise, et
      - pour chaque luminaire, comparaison de la couleur dudit luminaire dans l'image acquise à la couleur de référence dudit luminaire, ledit luminaire étant de préférence détecté dysfonctionnel si la couleur du luminaire dans l'image acquise se différencie de la couleur de référence de plus d'un premier seuil prédéfini,

   - lors de l'étape d'initialisation, la sous-étape d'obtention comprend le calcul d'une valeur moyenne de la couleur de chaque luminaire dans l'image de référence, dite valeur moyenne de référence, et, lors de l'étape de détection, la sous-étape d'analyse comprend le calcul d'une valeur moyenne de la couleur de chaque luminaire dans l'image acquise, la sous-étape de comparaison comprenant la comparaison de la valeur moyenne de la couleur de chaque luminaire de l'image acquise à la valeur moyenne de référence de chaque luminaire,
   - l'étape d'initialisation comporte en outre les sous-étapes suivantes :
      - réception d'une pluralité de deuxièmes images de référence représentant le compartiment et dans lequel au moins un luminaire respectif est dysfonctionnel ou éteint, et
      - entraînement du modèle d'intelligence artificielle pour la détection de luminaire(s) dysfonctionnel(s) à partir de chaque première image de référence et de chaque deuxième image de référence, par application d'un algorithme d'apprentissage automatique,
   - lors de l'étape de détection, le traitement de l'image acquise comprend les sous-étapes suivantes :
      - fourniture de l'image acquise à un modèle d'intelligence artificielle préalablement entrainé pour détecter si chaque luminaire du compartiment est fonctionnel ou dysfonctionnel, et
      - pour chaque luminaire du compartiment, comparaison de la valeur de sortie du modèle à un deuxième seuil, ledit luminaire étant détecté dysfonctionnel si la valeur de sortie est supérieure à un deuxième seuil ; et
   - lors de l'étape d'initialisation, une pluralité de premières images de référence est reçue, la pluralité de premières images de référence représentant le compartiment selon des ambiances lumineuses de le compartiment distinctes d'une première image de référence à une autre, la pluralité de deuxièmes images représentant le compartiment selon des ambiances lumineuses de le compartiment distinctes d'une deuxième image de référence à une autre.

La présente invention a également pour objet un dispositif électronique de détection d'un dysfonctionnement d'un luminaire à l'intérieur d'un véhicule, notamment ferroviaire, le dispositif comprenant :
- un module d'acquisition d'une image d'un compartiment à l'intérieur du véhicule, le compartiment comprenant au moins un luminaire, et
- un module de détection d'au moins un luminaire dysfonctionnel par traitement de l'image acquise.

La présente invention concerne également un produit programme d'ordinateur comprenant des instructions logicielles qui, lorsqu'elles sont exécutées par un ordinateur, mettent en oeuvre au moins les étapes d'acquisition et de détection d'un procédé tel que décrit ci-dessus.

L'invention sera mieux comprise et d'autres avantages de celle-ci apparaîtront plus clairement à la lecture de la description qui va suivre, donnée uniquement à titre d'exemple non limitatif, et faite en référence aux dessins annexés sur lesquels :
- la figure 1 est une vue schématique de l'intérieur d'une voiture d'un véhicule ferroviaire ;
- la figure 2 est un organigramme d'un procédé de détection d'un dysfonctionnement selon un premier mode de réalisation ; et
- la figure 3 est un organigramme d'un procédé de détection d'un dysfonctionnement selon un deuxième mode de réalisation.

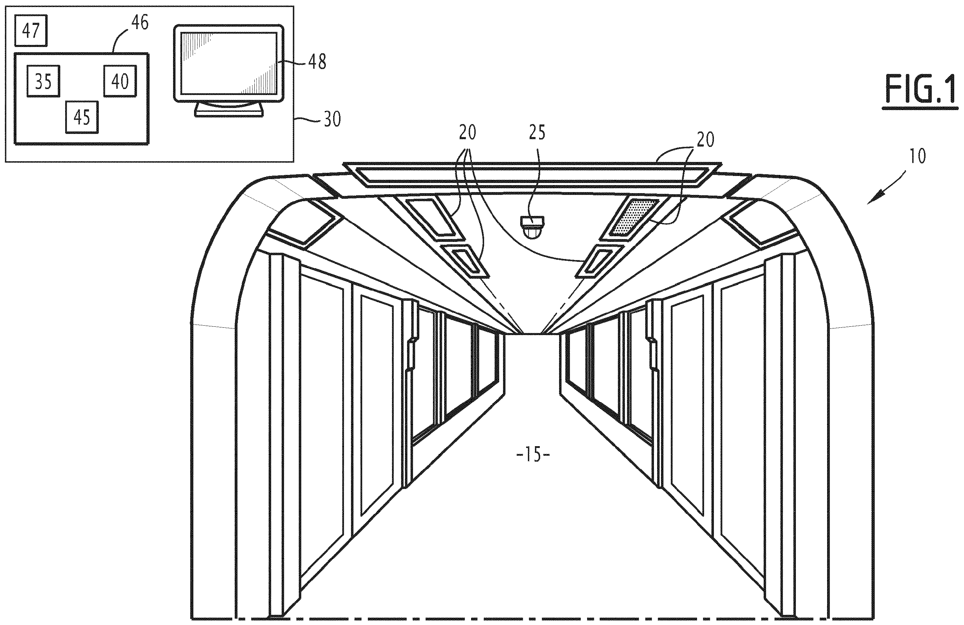

Sur la figure 1 est représentée l'intérieur d'une voiture 10 d'un véhicule. Le véhicule est par exemple un véhicule ferroviaire tel qu'un train, un métropolitain, ou un tramway. En variante, le véhicule est un bus.

La voiture 10 définit un compartiment 15 interne à ladite voiture 10. Le compartiment 15 est par exemple prévu pour recevoir des passagers.

Pour des raisons de simplification, l'aménagement intérieur de la voiture 10, tels que le sièges et les barres de maintien, n'est pas représenté.

La voiture 10 comprend au moins un luminaire 20 et au moins une caméra de surveillance 25.

Préférentiellement, la voiture 10 comprend une pluralité de luminaires 20 qui sont chacun disposés dans le compartiment 15.

Chaque luminaire 20 est soit fonctionnel, soit dysfonctionnel.

Un luminaire 20 dysfonctionnel désigne ici un luminaire 20 incapable de s'allumer. Un tel dysfonctionnement est par exemple lié à une rupture d'un circuit d'alimentation du luminaire 20 ou à une obsolescence d'un composant du luminaire 20.

Au contraire, un luminaire 20 fonctionnel est capable de s'allumer. Un luminaire 20 fonctionnel est soit allumé, soit éteint, mais est apte à s'allumer si un signal de commande est envoyé au luminaire.

Sur la figure 1, le luminaire 20 en haut à droite est par exemple dysfonctionnel. Ceci est illustré sur la figure 1 par le fait que ce luminaire 20 est grisé.

La caméra de surveillance 25 est disposée dans le compartiment 15. Elle est destinée à fournir des images du compartiment 15, par exemple pour surveiller les usagers afin d'identifier de potentiels incidents ou de potentielles incivilités (malaise d'un voyageur, vols, agressions...). La caméra de vidéosurveillance 25 est aussi appelée caméra CCTV (de l'anglais, *Closed-Circuit Télévision*).

A cet effet, la caméra de surveillance 25 acquiert des images du compartiment 15 dans lequel au moins un luminaire 20 apparaît.

Le véhicule comprend en outre un dispositif électronique de détection 30.

Le dispositif électronique de détection 30 est par exemple connecté à la caméra de surveillance 25. Il comprend un module d'initialisation 35, un module d'acquisition 40, et un module de détection 45.

Dans l'exemple de la Figure 1, le dispositif le dispositif électronique de traitement 20 comprend par exemple d'une mémoire 46 et un processeur 47 associé à la mémoire.

Dans l'exemple de la Figure 1, le module d'initialisation 35, le module de d'acquisition 40, et le module de détection 45, sont réalisés chacun sous forme d'un logiciel, ou d'une brique logicielle, et exécutables par le processeur. La mémoire 46 est apte à stocker un logiciel d'initialisation, un logiciel d'acquisition, et un logiciel de détection. Le processeur 47 est alors apte à exécuter chacun des logiciels parmi le logiciel d'initialisation, le logiciel d'acquisition, et le logiciel de détection.

En variante non-représentée, le module d'initialisation 35, le module d'acquisition 40, et le module de détection 45 sont réalisés chacun sous forme d'un composant logique programmable, tel qu'un FPGA (de l'anglais *Field Programmable Gate Array*), ou d'un circuit intégré, tel qu'un ASIC (de l'anglais *Application Spécifie Integrated Circuit*).

Lorsque le dispositif de détection 30 est réalisé sous forme d'un ou plusieurs logiciels, c'est-à-dire sous forme d'un programme d'ordinateur, il est en outre apte à être enregistré sur un support, non représenté, lisible par ordinateur.

Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Un premier mode de réalisation du dispositif électronique de détection 30 et un procédé de détection 100 associé, vont maintenant être décrit.

Selon le premier mode de réalisation, le module d'initialisation 30 est configuré pour recevoir une première image de référence représentant le compartiment 15 dans lequel chaque luminaire 20 est fonctionnel et allumé.

À titre d'exemple, le module d'initialisation 35 est configuré pour recevoir la première image fournie par un utilisateur, via une interface.

En variante, le module d'initialisation 35 est configuré pour recevoir la première image capturée directement par la caméra de surveillance 25. La première image est alors capturée dans une situation dans laquelle tous les luminaires 20 sont fonctionnels et allumés.

Le module d'initialisation 35 est également configuré pour obtenir une couleur de chaque luminaire 20 dans la première image de référence. Une telle couleur est alors dite couleur de référence.

À cet effet, le module d'initialisation 35 est par exemple configuré pour traiter la première image de référence afin d'extraire, pour chaque luminaire 20, la couleur dudit luminaire dans la première image de référence, selon une technique connue en soi.

De préférence, le module d'obtention 35 est configuré pour obtenir une liste de paramètres relatifs aux luminaires 20. La liste de paramètres comprend avantageusement, pour chaque luminaire 20, la couleur de référence dudit luminaire 20, et en outre, optionnellement, la position dudit luminaire, une luminosité associée audit luminaire 20 dans la première image de référence et/ou une ambiance lumineuse extérieure associée audit luminaire 20 dans la première image de référence.

Le module d'initialisation 35 est par exemple configuré pour calculer, pour chaque luminaire 20, au moins un ou chacun des paramètres de la liste des paramètres (par ex. la position, la couleur de référence, la luminosité et l'ambiance lumineuse) associés à ce luminaire 20.

Le module d'initialisation 35 est par exemple configuré pour obtenir au moins un ou chacun des paramètres de la liste de paramètres comme paramètre d'entrée, via une interface homme-machine du dispositif électronique de détection 30 utilisable par un utilisateur pour spécifier un ou plusieurs de paramètres de la liste de paramètres.

Dans un exemple de réalisation, le module d'initialisation 35 est configuré pour calculer chacun des paramètres de la liste de paramètres à partir de la première image de référence. Selon un exemple particulier, le module d'initialisation 35 est configuré pour calculer chacun des paramètres de la liste de paramètres associés à un luminaire 20 à partir d'une moyenne de l'exposition lumineuse associée audit luminaire 20 mesurée sur la première image de référence.

Dans un exemple de réalisation, le module d'initialisation 35 est configuré pour obtenir l'ensemble desdits paramètres depuis un utilisateur, via son interface homme-machine.

Dans ce cas, le module d'initialisation 35 n'est pas nécessairement configuré pour recevoir la première image de référence mais uniquement pour recevoir la liste de paramètres.

Dans un exemple de réalisation, pour au moins un ou chacun des luminaires 20, le module d'initialisation 35 est configuré pour calculer au moins un des paramètres de la liste de paramètres et pour recevoir au moins un autre des paramètres de la liste de paramètre.

Le module d'acquisition 45 est par exemple directement connecté à la caméra de surveillance 25. Le module d'acquisition 45 est configuré pour acquérir, depuis la caméra de surveillance 25, une image du compartiment 15 capturée par la caméra de surveillance. Comme il sera détaillé par la suite, l'image acquise par le module d'acquisition 40, est l'image sur laquelle un ou plusieurs dysfonctionnements de luminaire 20 sera potentiellement détecté.

Le module de détection 45 est configuré pour détecter un dysfonctionnement d'un ou plusieurs luminaires 20 respectifs.

À cet effet, le module de détection 45 est configuré pour analyser l'image acquise capturée via la caméra de surveillance 25.

De préférence, le module de détection 45 est configuré pour analyser l'image acquise à partir de la position de chaque luminaire 20, pour déterminer une couleur de chaque luminaire 20 dans l'image acquise.

À titre d'exemple, la position de chaque luminaire 20 dans l'image acquise est déterminé comme une zone de pixels déterminée à partir de la position de chaque luminaire 20. Le module de détection 45 est alors par exemple configuré pour calculer la couleur associée à chaque luminaire 20 dans l'image acquise comme une valeur moyenne de la couleur des pixels associés à ce luminaire 20 dans l'image acquise.

En variante, le module de détection 45 est configuré pour calculer la couleur associée à chaque luminaire 20 dans l'image acquise comme la valeur maximale ou minimale de la couleur des pixels associés à ce luminaire 20 dans l'image acquise.

Le module de détection 45 est en outre configuré pour comparer la couleur associée à chaque luminaire 20 dans l'image acquise à la couleur de référence dudit luminaire 20.

Le module de détection 45 est par exemple configuré pour détecter que ledit luminaire 20 est dysfonctionnel si la couleur associée au luminaire 20 dans l'image acquise se différencie de la couleur de référence de plus d'un premier seuil prédéfini.

Par exemple, le module de détection 45 est configuré pour calculer la valeur absolue de la différence entre la couleur calculée pour ledit luminaire 20 dans l'image acquise et de la couleur de référence de ce luminaire 20. Le module de détection 45 est configuré pour ensuite comparer ladite valeur absolue au premier seuil prédéfini.

Selon le complément facultatif dans lequel le module d'initialisation 25 reçoit en outre la luminosité et/ou l'ambiance lumineuse associée(s) à chaque luminaire 20, le module de détection 45 est configuré pour pondérer la couleur de référence de chaque luminaire 20 et/ou la couleur calculée pour chaque luminaire 20 dans l'image acquise, par la luminosité et/ou l'ambiance lumineuse associée(s), avant le calcul de la valeur absolue de la différence entre la couleur calculée pour ledit luminaire 20 dans l'image acquise et de la couleur de référence de ce luminaire 20.

En complément facultatif, le module de détection 45 est configuré pour transmettre la liste de luminaire(s) 20 dysfonctionnel(s) et/ou la liste de luminaire(s) 20 fonctionnel(s), en vue de la communication à un opérateur humain. A cet effet, le module de détection 30 communique par exemple avec un ordinateur extérieur au dispositif de détection 30. En variante, le dispositif de détection 30 comprend un écran d'affichage 48, pour afficher la liste de luminaire(s) 20 dysfonctionnel(s) et/ou de luminaire(s) 20 fonctionnel(s)

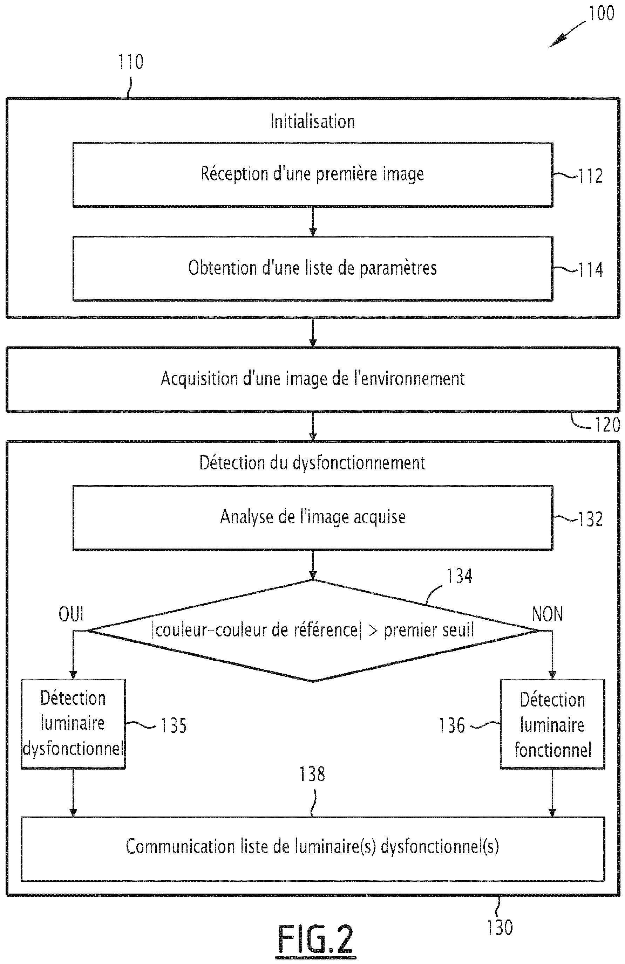

Le fonctionnement du dispositif électronique de détection 30 selon le premier mode de réalisation va maintenant être décrit en référence à la figure 2, via un premier procédé de détection 100.

Initialement, la voiture 10 comprend des luminaires 20 fonctionnels et des luminaires 20 dysfonctionnels. La caméra de surveillance 25 acquiert des images du compartiment 15 dans lequel se trouvent lesdits luminaires 20.

Optionnellement, le procédé 100 comprend premièrement une étape d'initialisation 110. L'étape d'initialisation 110 comprend préférentiellement une sous-étape de réception 112 au cours de laquelle le module d'initialisation 35 reçoit la première image de référence, fournie par exemple par l'utilisateur via une interface homme-machine.

Puis, lors d'une sous-étape d'obtention 114, le module d'initialisation 35 obtient la liste de paramètres. Comme indiqué précédemment, la liste de paramètres comporte au moins la couleur de référence associée à chaque luminaire 20 dans la première image de référence. Cette obtention est soit réalisée par analyse de l'image acquise comme précédemment expliqué, soit par la fourniture, depuis un utilisateur externe, de la liste de paramètres.

Préférentiellement, la liste de paramètres comprend en outre, pour chaque luminaire 20, la position du luminaire 20, la luminosité du luminaire 20 dans la première image de référence et l'ambiance lumineuse autour du luminaire 20 dans la première image de référence.

Puis, lors d'une étape d'acquisition 120, le module d'acquisition 40 acquiert, depuis la caméra de surveillance 25, l'image du compartiment 15, dite image acquise.

Ensuite, lors d'une étape de détection 130, le module de détection détecte au moins un luminaire 20 dysfonctionnel par traitement de l'image acquise.

À cet effet, lors d'une sous-étape d'analyse 132, le module de détection 45 calcule par exemple une couleur associée à chaque luminaire 20 dans l'image acquise comme une valeur moyenne de la couleur de chaque luminaire 20 dans l'image acquise selon la technique décrite précédemment.

En variante, le module de détection 45 calcule la couleur associée à chaque luminaire 20 dans l'image acquise comme la valeur maximale ou minimale de la couleur des pixels de la zone de pixels associée à ce luminaire 20 dans l'image acquise.

Puis, lors d'une sous-étape de comparaison 134, le module de détection 45 compare, pour chaque luminaire 20, la couleur associée à ce luminaire 20 dans l'image acquise à la couleur de référence associée à ce luminaire 20.

La sous-étape de comparaison 134 comprend notamment le calcul de la valeur absolue de la différence entre la couleur du luminaire 20 dans l'image acquise et la couleur de référence associée au luminaire 20. Puis, la sous-étape de comparaison 134 comprend la comparaison de cette valeur absolue au premier seuil. Avantageusement, pour chaque luminaire 20, lors de la sous-étape de comparaison 134, le module de détection 45 pondère la couleur de référence et/ou la couleur dans l'image acquise par l'ambiance lumineuse et/ou la luminosité associée(s) au luminaire 20.

Il est clair que la sous-étape de comparaison 134 ainsi que les étapes qui suivront sont mises en oeuvre pour chaque luminaire 20 dans l'image acquise.

Ainsi, pour chaque luminaire 20, si la couleur associée à ce luminaire 20 dans l'image acquise se différencie de la couleur de référence de plus du premier seuil, alors, lors d'une première sous-étape de détection 135, ledit luminaire 20 est détecté dysfonctionnel.

Au contraire, si la couleur associée à ce luminaire 20 dans l'image acquise se différencie de la couleur de référence de moins du premier seuil, alors, lors d'une deuxième sous-étape de détection 136, le luminaire 20 est détecté fonctionnel.

En complément facultatif, lors d'une sous-étape de communication 138, le module de détection 45 transmet, à destination de l'utilisateur la liste de luminaire(s) 20 dysfonctionnel(s) et/ou de luminaire(s) fonctionnel(s), via une communication avec un ordinateur externe ou via l'écran d'affichage 48.

Un second mode de réalisation du dispositif de détection 30 va maintenant être décrit, uniquement par ces différences avec le dispositif de détection 30 selon le premier mode de réalisation.

Dans ce deuxième mode de réalisation, le module de détection 45 est configuré pour analyser l'image acquise via l'inférence, c'est-à-dire la mise en oeuvre, d'un modèle d'intelligence artificielle, en particulier un réseau de neurones artificiels (ou ANN de l'anglais « Artificial Neural Network ») entraîné pour la détection du ou des luminaires 20 dysfonctionnels et du ou des luminaire fonctionnels 20 dans l'image acquise.

Dans le deuxième mode de réalisation, le module d'initialisation 35 n'est pas configuré pour obtenir la liste de paramètres associée à chaque luminaire 20.

Plutôt, le module d'initialisation 35 est configuré pour entraîner le module de détection 45, et plus particulièrement le modèle d'intelligence artificiel du module de détection 45.

Le module d'initialisation 35 est configuré pour recevoir une pluralité de premières images de référence et non pas une seule.

En outre, le module d'initialisation 35 est configuré pour recevoir une pluralité de deuxièmes images de référence. Chaque deuxième image de référence représente le compartiment 15 dans lequel au moins un luminaire 20 est dysfonctionnel ou éteint.

Préférentiellement, chaque image de la pluralité de premières images de référence et de la pluralité de deuxièmes images de référence correspondent à des luminosités et/ou ambiances lumineuses distinctes d'une image à une autre.

Le module d'initialisation 35 est par exemple configuré pour appliquer un algorithme d'apprentissage automatique au module de détection 45.

Le modèle d'intelligence artificielle du module de détection 45 est par exemple un réseau de neurones artificiel comprenant une couche d'entrée propre à recevoir une image, une ou plusieurs couches cachées comportant chacune une pluralité de neurones, et une couche de sortie, comportant par exemple un neurone par luminaire 20 dans les premières et deuxièmes images.

Le modèle d'intelligence artificielle du module de détection 45 comprend alors, entre chaque paire de couches successives, des connexions comportant respectivement un poids paramétrable, aussi appelé « poids synaptique », propre à être modifié lors de l'application de l'algorithme d'apprentissage automatique.

À l'issue de l'apprentissage automatique, le modèle de détection d'intelligence artificielle du module de détection 45 est appelé modèle « entrainé ».

Le module d'acquisition 40 selon le deuxième mode de réalisation est analogue au module d'acquisition 40 selon le premier mode de réalisation.

Dans le deuxième mode de réalisation, le module de détection 45 est configuré pour traiter l'image acquise via l'inférence du modèle d'intelligence artificielle préalablement entrainé, afin d'obtenir, pour chaque luminaire 20, une valeur de sortie.

Par exemple, le module de détection 45 est configuré pour, suite à la fourniture de l'image acquise au modèle d'intelligence artificielle préalablement entrainé, obtenir un vecteur de valeur(s) de sortie, dans lequel chaque composante du vecteur de valeur(s) de sortie est associée à un luminaire 20 respectif.

Le module de détection 45 est par exemple configuré pour comparer, pour chaque luminaire 20, la valeur de sortie associée, à un deuxième seuil prédéfini.

Le module de détection 45 est alors configuré pour, si la valeur de sortie associée à un luminaire 20 respectif est supérieure au deuxième seuil prédéfini, détecter que ledit luminaire 20 est dysfonctionnel. Au contraire, le module de détection 45 est configuré pour, si la valeur de sortie associée à un luminaire respectif 20, est inférieure au deuxième seuil prédéfini, détecter ledit luminaire 20 comme fonctionnel.

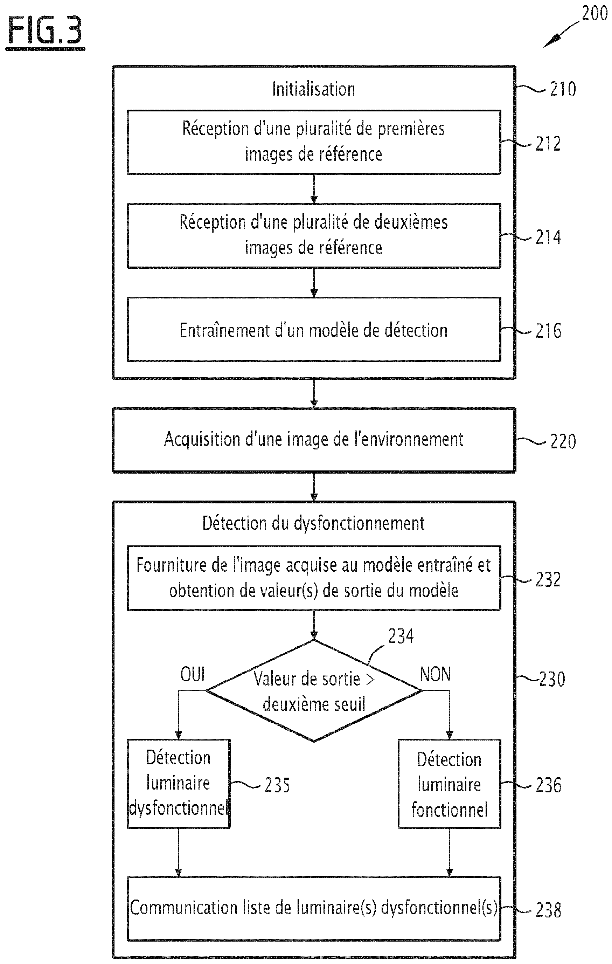

Le fonctionnement du dispositif électronique de détection 30 selon le deuxième mode de réalisation va maintenant être décrit en référence à la figure 3, via un procédé de détection 200 selon le deuxième mode de réalisation.

Tout comme dans le premier mode de réalisation du procédé de détection 100, le procédé de détection 200 selon le deuxième mode de réalisation comprend des étapes d'initialisation 210, d'acquisition 220 et de détection 230.

L'étape d'initialisation 210 comprend une première sous-étape de réception 212, lors de laquelle le module d'initialisation 35 reçoit la pluralité de premières images de référence.

L'étape d'initialisation 210 comprend en outre une deuxième sous-étape de réception 214, lors de laquelle le module d'initialisation 35 reçoit la pluralité de deuxièmes images de référence.

Puis, l'étape d'initialisation 210 comprend une sous-étape d'entrainement 216, lors de laquelle le module d'initialisation 35 entraine le modèle d'intelligence artificielle du module de détection à partir des premières images de référence et de deuxièmes images de référence, pour obtenir le modèle d'intelligence artificielle entrainé.

Lors de l'étape d'acquisition 220, le module d'acquisition 40 acquiert un image de du compartiment 15 capturée à l'aide de la caméra de surveillance 25.

L'étape de détection 230 comprend une sous-étape 232 traitement de l'image acquise via l'inférence du modèle d'intelligence artificielle préalablement entrainé afin d'obtenir le vecteur de valeur(s) de sortie.

Puis, l'étape de détection 230 comprend une sous-étape de comparaison 234 lors de laquelle le module de détection 45 compare chaque valeur de sortie du vecteur de valeur(s) de sortie au deuxième seuil, chaque valeur de sortie étant associée à un luminaire 20 respectif.

Puis, pour chaque luminaire 20, si la valeur de sortie est supérieure au deuxième seuil, le luminaire 20 associé est détecté dysfonctionnel lors d'une première sous-étape de de détection 235.

Au contraire, pour chaque luminaire 20, si la valeur de sortie est inférieure au deuxième seuil, le luminaire 20 associé est détecté fonctionnel lors d'une deuxième sous-étape de de détection 236.

En complément facultatif, lors d'une sous-étape de communication 238, le module de détection 45 envoie, à l'utilisateur la liste de luminaire(s) 20 dysfonctionnel(s) et/ou de luminaire(s) fonctionnel(s), via une communication avec un ordinateur externe ou via l'écran d'affichage 48.

Selon une variante non-représentée, le dispositif électronique de détection 30 selon le premier ou le deuxième mode de réalisation est déporté du véhicule. Selon cette variante, la caméra de surveillance 25 est propre à capturer les images du compartiments 15 est à les stocker dans une base de données par exemple également déportée du véhicule et/ou commune à plusieurs véhicules.

Dans cette variante, le module d'acquisition 40 est configuré pour acquérir la ou les images acquises depuis la base de données, par exemple périodiquement selon une période prédéfinie. On comprend alors que le module d'acquisition 40 est configuré pour, à l'expiration de la période prédéfinie, acquérir toutes les images stockées dans la base de données depuis la dernière acquisition. Le module de détection 45 est alors configuré pour détecter, pour chaque image acquise le(s) luminaire(s) 20 dysfonctionnel(s) et/ou le(s) luminaire(s) 20 fonctionnel(s).

Le dispositif de détection 30 et le procédé de détection 100, 200 associé permettent la détection facile de luminaire(s) 20 dysfonctionnel(s).

En effet, grâce à l'utilisation d'images acquise par une ou des caméras de surveillance d'un compartiment 15 du véhicule, il n'est plus nécessaire de vérifier manuellement chaque luminaire 20.

Il est clair que la solution proposée est plus rapide est moins fastidieuse que la vérification manuelle.

En outre, la solution proposée est plus sûre puisque la détection est réalisée avec des critères objectifs définis par les premiers et deuxièmes seuils et non par la subjectivité du contrôle humain.

## Revendications

1. Procédé (200) de détection d'un dysfonctionnement d'un luminaire (20) à l'intérieur d'un véhicule, notamment ferroviaire, le procédé (200) étant mis en oeuvre par un dispositif électronique de détection (30) et comprenant les étapes suivantes :
- acquisition (220) d'une image d'un compartiment (15) à l'intérieur du véhicule, le compartiment (15) comprenant au moins un luminaire (20), et
- détection (230) d'au moins un luminaire (20) dysfonctionnel par traitement de l'image acquise,
le procédé comprenant en outre, une étape d'initialisation (210) comportant la réception (212) d'au moins une première image de référence représentant le compartiment (15) dans lequel chaque luminaire (20) est fonctionnel et allumé,
dans lequel l'étape d'initialisation (210) comporte en outre les sous-étapes suivantes :
- réception (214) d'une pluralité de deuxièmes images de référence représentant le compartiment (15) et dans lequel au moins un luminaire (20) respectif est dysfonctionnel ou éteint, et
- entraînement (216) d'un modèle d'intelligence artificielle pour la détection de luminaire(s) (20) dysfonctionnel(s) à partir de chaque première image de référence et de chaque deuxième image de référence, par application d'un algorithme d'apprentissage automatique.

2. Procédé (200) selon la revendication 1, dans lequel l'image acquise est issue d'une caméra de surveillance (25) embarquée dans le véhicule.

3. Procédé (200) selon la revendication 1 ou 2, dans lequel lors de l'étape de détection (230), le traitement de l'image acquise comprend les sous-étapes suivantes :
- fourniture (232) de l'image acquise à un modèle d'intelligence artificielle préalablement entrainé pour détecter si chaque luminaire (20) du compartiment (15) est fonctionnel ou dysfonctionnel, et
- pour chaque luminaire (20) du compartiment (15), comparaison (234) de la valeur de sortie du modèle à un deuxième seuil, ledit luminaire (20) étant détecté dysfonctionnel si la valeur de sortie est supérieure à un deuxième seuil.

4. Produit programme d'ordinateur comprenant des instructions logicielles qui, lorsqu'elles sont exécutées par un ordinateur, mettent en oeuvre un procédé (200) selon l'une quelconque des revendications précédentes.

5. Dispositif (30) de détection électronique d'un dysfonctionnement d'un luminaire (20) à l'intérieur d'un véhicule, notamment ferroviaire, le dispositif comprenant :
- un module d'acquisition (40) d'une image d'un compartiment (15) à l'intérieur du véhicule, le compartiment (15) comprenant au moins un luminaire (20), et
- un module de détection (45) d'au moins un luminaire (20) dysfonctionnel par traitement de l'image acquise
le dispositif (30) comprenant en outre, un module d'initialisation (35) configuré pour recevoir au moins une première image de référence représentant le compartiment (15) dans lequel chaque luminaire (20) est fonctionnel et allumé,
dans lequel le module d'initialisation (35) est en outre configuré pour:
- recevoir une pluralité de deuxièmes images de référence représentant le compartiment (15) et dans lequel au moins un luminaire (20) respectif est dysfonctionnel ou éteint, et
- entrainer un modèle d'intelligence artificielle du module de détection (45) pour la détection de luminaire(s) (20) dysfonctionnel(s) à partir de chaque première image de référence et de chaque deuxième image de référence, par application d'un algorithme d'apprentissage automatique.
